Europäisches Patentamt

European Patent Office

Office européen des brevets

(11) Publication number: **0 247 897**
**A1**

## EUROPEAN PATENT APPLICATION

(21) Application number: 87304791.4

(22) Date of filing: 29.05.87

(51) Int. Cl.⁴: **B 32 B 27/32**

(30) Priority: 30.05.86 GB 8613163

(43) Date of publication of application:
02.12.87 Bulletin 87/49

(84) Designated Contracting States:
BE DE ES FR GB IT

(71) Applicant: EXXON CHEMICAL PATENTS INC.
1900 East Linden Avenue
Linden New Jersey 07036 (US)

(72) Inventor: Bossaert, Bernhard Louis Luc
Gentse Steenweg 1140 B-44
B-1080 Brussels (BE)

Ohlsson, Stefan Bertil
Bld Bischoffsheim 39 B-13
B-1000 Brussels (BE)

Willems, William F.M.J.
Sparrenweg 12
B-2850 Keerbergen (BE)

(74) Representative: Bawden, Peter Charles et al
EXXON CHEMICAL LIMITED EXXON CHEMICAL
TECHNOLOGY CENTRE PO Box 1
Abingdon Oxfordshire OX13 6BB (GB)

(54) Sealable films.

(57) A sealable film having superior seal strength comprising a base layer comprising a polyolefin, e.g. polypropylene, said layer having on at least one surface thereof 1 to 20 weight % of a film layer comprising a linear polyethylene of density between 0.875 and 0.9l5 gm/cc and comprises less than 96 mol % by weight of ethylene.

EP 0 247 897 A1

**Description**

## SEALABLE FILMS

This invention relates to films based on polypropylene and which can be sealed by the application of heat.

Various polypropylene films have been described, e.g. in GB 2028168A, EP 002606, EP 135178 and DE 3247988 where the core or substrate of the film is polypropylene. Various additives are added for example certain modulus improvers, certain antistatic media, siloxanes and pigments.

EP 002606 describes the use of copolymers of ethylene and octene or of methyl-pentene of density from 0.900 up to 0.939 comprising at least 90% by weight of ethylene as heat seal coatings for polypropylene film. Such a copolymer with octene as comonomer contains a maximum of 2.7 mol % octene and with 4-methyl-pentene -I contains a maximum of 3.3 mol% 4 methyl-pentene-I. As is specified in EP 0002606 the addition of progressively larger amounts of the comonomer results in a progressive lowering, in approximately a linear fashion of the density of the copolymer. Our work has shown that in order to obtain a density of 0.915 grms/cc or below with octene or 4-methyl-pentene-I as comonomer it is necessary to copolymerise at least 4 mole % of the alpha olefin with the ethylene and thus EP 0002606 is concerned with the use of linear low density polyethylenes (ie density above 0.915) as heat seal coatings.

We have devised films having a seal layer needing only one component which show improved seal strength properties over those previously known having only one component in the seal layer, i.e. either the seal strength is much improved at the same temperature of sealing or the same seal strength can be obtained at lower temperatures.

According to this invention a sealable film comprises a base layer comprising a polyolefin said layer having on at least one surface thereof I to 20 weight % based on the weight of the base layer, of a film layer comprising a linear polyethylene of density between 0.875 and 0.915 grams/cc. Throughout this application all densities are measured by ASTM D 1505.

These films are capable of being used in the packaging industry and can meet the stringent criteria which are required for such films, such as sufficiently high modulus, excellent clarity and in particular superior seal strength properties.

The base layer comprises a polyolefin. The polyolefin is preferably a polymer of a mono-alpha olefin containing from 2 to 8 carbon atoms and particularly 2 to 4 carbon atoms per molecule. Thus the polymer may be a homopolymer of one of the following olefins or a copolymer of two or more of the following olefins, ethylene, propylene, butene-I and 4-methyl pentene-I. A particularly suitable material for the base layer of the film is polypropylene, especially a high molecular weight stereoregular predominantly crystalline polymer of propylene. Alternatively, a copolymer of propylene with up to 20 weight per cent of another olefin, e.g.

ethylene, could be used. An especially preferred polyolefin is an isotactic polypropylene with a density of from 0.86 to 0.92 g/cc (measured by ASTM D 1505) and melt flow index of from I to 15 g/10 min as determined according to ASTM D1238 (condition 230°C and 2.16 kg). It may be made by Ziegler polymerisation methods using for example AlCl3 and TiCl4 as catalyst.

The base layer or core of the film has on one or preferably both surfaces I to 20 weight per cent, preferably I to 10 weight per cent and particularly about 5 weight per cent for the or each surface based on the weight of the base layer, of the polyethylene of density 0.875 to 0.915 grams/cc.

The linear polyethylene of density 0.875 to 0.915 grams/cc (VLDPE) is a linear copolymer of ethylene and an alpha-olefin such as butene, hexene, octene or 4-methyl-pentene-I and comprises at least 85% but less than 95% mol per cent of ethylene.

It is usually prepared by polymerisation in the presence of Ziegler catalysts such as AlCl3 and TiCl4. A preferred polyethylene is a linear copolymer of ethylene and butene, hexene or octene having a density of between 0.900 and 0.915 gm/cc and comprises at least 92% but less than 96% mol per cent of ethylene.

The films of this invention, i.e. multilayer films are suitably formed by combining the components (which may if desired include other components such as an antistatic medium, blocking agents and slip aids of the base layer and surface layer(s) in a conventional manner, preferably by a simultaneous co-extrusion technique.

Multiple-layer films according to the invention may be unorientated or uniaxially orientated, but are preferably biaxially orientated by drawing in two mutually perpendicular directions in the plane of the film to impart strength thereto. Orientation of flat film may be effected by a stenter technique, while orientated tubular film is suitably produced by coextruding the polymeric materials in the form of a multi-layer tube from an annular die, cooling the extruded tube (the cast tube), reheating and inflating the tube by the so-called "bubble" process to introduce transverse orientation, and simultaneously elongating the tube longitudinally to orientate the film in a lengthwise direction. The film is then preferably "heat-set", i.e. dimensional stability of the film is improved by heating the film while restrained against thermal shrinkage, to a temperature above the glass transition temperature of the polymer from which the film is formed but below the melting point thereof.

The films may vary in thickness depending on the intended application, but films of a thickness of from 2 to 150 microns are usually suitable. Films intended for packaging are usually from 10 to 60 microns thick. The thickness of the or each outer film layer is usually from 0.05 to 2.5 microns.

## Example

In this Example co-extruded films of different composition were made and compared as to their sealability and optical properties.

These films were biaxially orientated by drawing in two materially perpendicular directions in the plane of the film to impart strength thereto. The stenter technique was used to impart an orientation ratio of 500% in machine direction and of 900% in transverse direction. Each total of the biaxially orientated films had two seal layers of 1 micron thickness while the total thickness was about 22 microns.

The first film which was for comparison purposes consisted of a core of isotactic polypropylene having a density of 0.90 g/cc and a melt flow index of 2.8 g/10 min as determined according to ASTM D1238 (conditions 230°C and 2.16 kg). On both faces of the core there was a random copolymer of about 95.5 weight per cent propylene and 4.5 weight per cent of ethylene. This an isotactic copolymer with a density of 0.90 g/cc and a melt flow index of 6.5 g/10 min as determined according to ASTM D1238 (conditions 230°C and 2.16 kg).

The second film was the same as the first film except that on both faces of the core of isotactic polypropylene there was a film of LLDPE. LLDPE is a linear low density polyethylene prepared by copolymerising ethylene with n-butene, using a Ziegler catalyst, the copolymer having at 95.6 mol per cent ethylene and a density of 0.918 g/cc.

The third film was the same as the first film except that each surface of the core was covered with a film comprising VLDPE. VLDPE is very low density polyethylene prepared by copolymerising ethylene with octene using a Ziegler catalyst, the copolymer having 95 mol per cent ethylene and a density of 0.911 g/cc and a melt flow index of 7.0 g/10 min as determined according to ASTM D1238 (conditions 190°C and 2.16 kg)

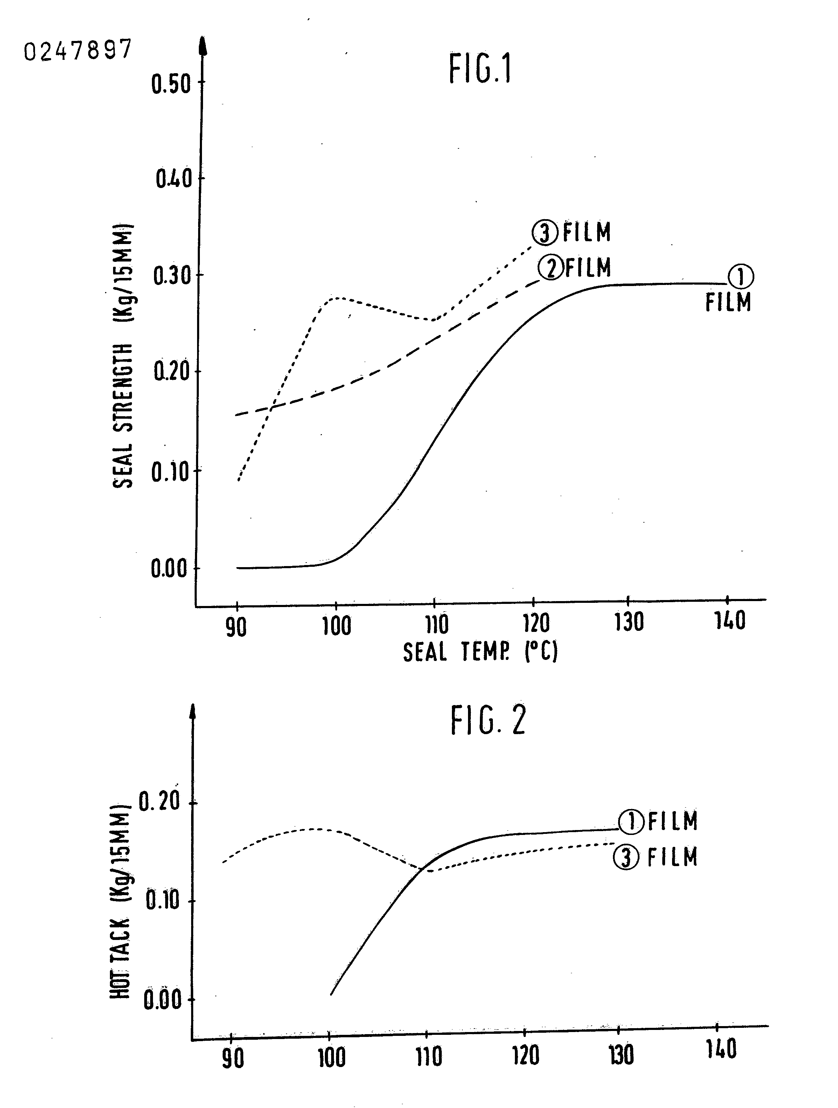

The accompanying Fig 1 to 4 show the results obtained for the seal strength, hot tack haze and gloss for films 1 and 2 (comparative), and 3 (according to the invention).

These tests were carried out as follows:

## Seal strength

This is the "cold" heat seal strength of the film which is measured after the seal has cooled to ambient temperature and the full potential strength of the seal has developed.

A Packforsk Hot Tack Tester (model 52-B) from Design and Test Consult AB (Bromma-Sweden) has been used to make the heat seals. A strip of 15 mm wide and some 280 mm long is thereto folded over upon itself and sealed together between the heated jaws of this instrument. The formed seal has an area of some 15 × 5 mm. Dwell conditions on the seal have been kept constant at a pressure of 5 bar and a dwell time of 0.5 seconds. To measure the seal strength, the instrument is used in a mode whereby upon opening of the sealing jaws the automatic peeling action used for hot tack measurements is not activated. The seal is instead cooled to ambient temperature. The unsealed ends of the strip are then attached to the jaws of a tensile testing machine.

The force required to break the seal at a rate of 508 mm/min is recorded by the tensile tester and expressed as the seal strength in kg/15 mm.

## Hot tack

This is the strength of the heat seal measured just after the seal has been made and before the thermal energy employed to form the heat seal has dissipated. The hot tack has been determined using the same Packforsk instrument. The heat seal is made as described above but just after the opening of the sealing jaws a peeling action is now automatically started and the force to break the seal is automatically recorded and expressed as the hot tack in kg/15 mm. The peeling operation takes place at a controlled delay time ( = time between opening of the jaws and start of the peeling operation) and controlled peel rate. Following constant conditions have been used for all hot tack determinations : delay time = 0.9 seconds, peel rate = 100 mm/s.

## Haze and Gloss

These optical properties of the film have been determined with a Gardner Haxemeter, haze according to ASTM D1003 and gloss according to ASTM D523.

From Fig 1 it can be seen that the seal strength (kg/15 mm) for film 3 is much higher at temperatures of between 100° and 120°C than for films 1 and 2.

From Fig 2 it can be seen that the hot tack (kg/15 mm) for film 3 is much better than for film 1 for temperatures up to about 105°C and comparable with that for film 1 from about 105 to 130°C.

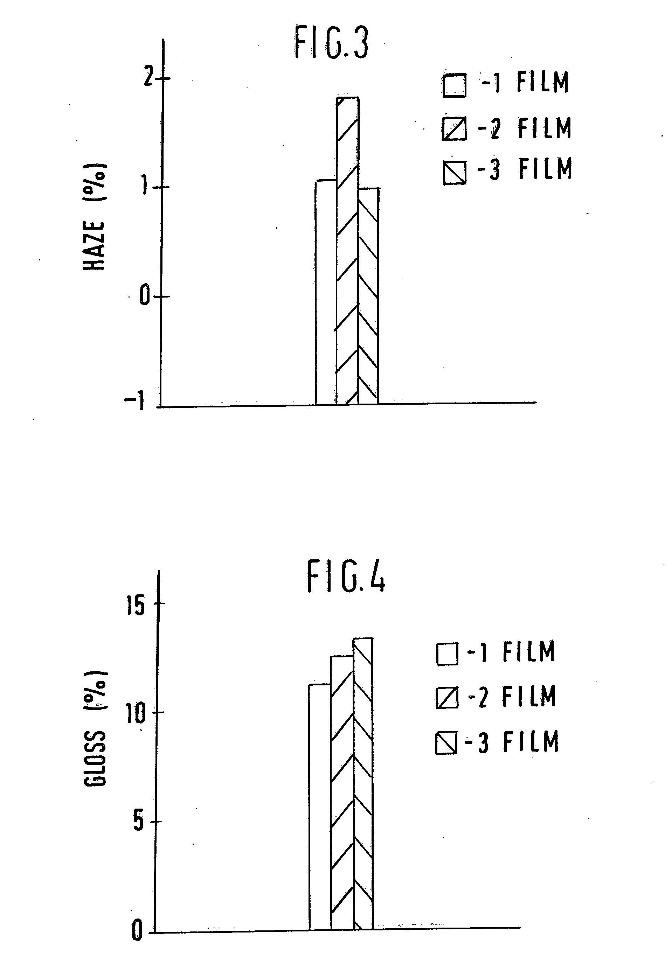

From Fig 3 and 4 it can be seen that the haze and gloss of film 3 are slightly improved compared with those for films 1 and 2.

It is quite surprising that with the presence of the very specific linear low density polyethylene in the surface layer one achieves such good results.

**Claims**

1. A sealable film comprising a base layer which comprises a polyolefin, said layer having on at least one surface thereof 1 to 20 weight % based on the weight of the base layer, of a film layer comprising a linear low density polyethylene containing less than 96 mol % ethylene and of density between 0.875 and 0.915 grams/cc.

2. A film according to claim 1 wherein the polyolefin in the base layer is a polymer of a mono alpha olefin containing 2 to 4 carbon atoms per molecule, preferably polypropylene.

3. A film according to claim 2 wherein the polypropylene is an isotactic polypropylene with a density of from 01.86 to 0.92 g/cc and a melt flow index of from 1 to 15 g/10 min as determined according to ASTM D1238 (conditions 230°C and 2.16 kg).

4. A film according to any one of the preceding claims wherein the base layer has on each surface 1 to 10 weight per cent based on the base layer of the film comprising linear low density polyethylene of density between 0.875 and 0.9l5 grams/cc.

5. A film according to any one of the preceding claims wherein the very low density polyethylene is a linear copolymer of ethylene and butene, hexene or octene having a density of from 0.900 to 0.9l5 and comprising at least 92 mol per cent of ethylene.

6. A film according to any one of the preceding claims which is biaxially orientated.

7. A film according to any one of the preceding claims which is l0 to 60 microns thick and wherein the thickness of the or each outer film layer is 0.05 to 2.5 microns.

0247897

FIG.1

FIG. 2

0247897

# FIG.3

HAZE (%)

☐ -1 FILM
▨ -2 FILM
◪ -3 FILM

# FIG.4

GLOSS (%)

☐ -1 FILM
▨ -2 FILM
◪ -3 FILM

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 002 606 (MOBIL OIL) <br> * Claims 1-6; page 4, paragraph 2 - page 7, paragraph 1; examples 1-5 * | 1-6 | B 32 B 27/32 |
| A | EP-A-0 144 999 (IDEMITSU PETROCHEMICAL) <br> * Claims 1,3,4; page 3, paragraph 3 - page 7, paragraph 3; examples 1-5 * | 1-3,5, 7 | |
| A | GB-A-1 440 317 (BRITISH CELLOPHANE) <br> * Claims 1,2,5,7,10-12; page 1, line 8 - page 2, line 42; examples 1,2 * | 1,2,4, 6 | |
| P,X | EP-A-0 221 726 (MOBIL OIL) <br> * Claims 1-7; column 1, line 63 - column 3, line 58; example * | 1-7 | **TECHNICAL FIELDS SEARCHED (Int. Cl.4)** <br><br> B 32 B |

The present search report has been drawn up for all claims

| Place of search | Date of completion of the search | Examiner |
|---|---|---|
| THE HAGUE | 13-08-1987 | BLASBAND I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82